# EUROPEAN PATENT SPECIFICATION

(11) **EP 3 312 130 B1**
(45) Date of publication and mention of the grant of the patent: **04.12.2019**
(21) Application number: 16195291.6
(22) Date of filing: 24.10.2016
(51) Int. Cl.: B66C 23/70, F16C 29/02

(54) **SLIDING ELEMENT AND TELESCOPIC DEVICE COMPRISING SUCH A SLIDING ELEMENT**
SCHIEBEELEMENT UND TELESKOPVORRICHTUNG MIT SOLCH EINEM SCHIEBEELEMENT
ÉLÉMENT COULISSANT ET DISPOSITIF TÉLESCOPIQUE COMPRENANT UN TEL ÉLÉMENT COULISSANT

(43) Date of publication of application: 25.04.2018
(73) Proprietor: Cargotec Patenter AB, 341 81 Ljungby (SE)
(72) Inventor: ÅKERLUND, Johan, 824 40 Hudiksvall (SE)
(74) Representative: Bjerkéns Patentbyrå KB (Gävle)

(56) References cited:
- EP-B1- 2 181 956
- EP-B1- 2 464 592

## Description

### FIELD OF THE INVENTION AND PRIOR ART

The present invention relates to a sliding element according to the preamble of claim 1. The invention also relates to a telescopic device, particularly in the form of a telescopic crane boom or a telescopic support leg, according to the preamble of claim 6.

Extendable and retractable telescopic devices with two or more mutually displaceable telescopic parts are frequently used in different types of apparatuses and machines and may for instance have the form of crane booms, support legs, rods, pillars etc. A hydraulic crane is for instance often provided with a telescopic device in the form of telescopic crane boom comprising two or more mutually displaceable telescopic parts in the form of telescopic crane boom parts. When the telescopic parts are heavy and/or made of a material with comparatively high coefficient of friction, sliding elements of a material with lower coefficient of friction are often arranged between the telescopic parts in order to facilitate a mutual sliding movement between the telescopic parts and in order to protect the telescopic parts from wearing. Such a sliding element has to be attached to one of the telescopic parts in a suitable manner so that the sliding element is retained at the desired place between the telescopic parts. In some types of telescopic devices, for instance telescopic crane booms, the sliding element is worn down in course of time and it might finally be necessary to exchange it for a new sliding element. In the last-mentioned case, it is desirable that the sliding element is detachably mounted to the telescopic part in question in such a manner that a removal of an old worn down sliding element and an installation of a new sliding element can be made easily and rapidly.

It is previously known to secure plate-shaped sliding elements to a telescopic part by means of fastening members in the form of screws, pins or plugs. The use of one or more plugs for securing a sliding element to a telescopic part is for instance disclosed in US 3 221 482 A and EP 2 181 956 B1, and the use a pin for securing a sliding element to a telescopic part is for instance disclosed in EP 2 464 592 B1 which also discloses the preamble of claim 1.

### SUMMARY OF THE INVENTION

The object of the present invention is to provide a sliding element with a new design, which is mountable to a telescopic part of a telescopic device in a simple, rapid and reliable manner. According to the invention, this object is achieved by means of a sliding element having the features defined in claim 1.

The sliding element of the present invention comprises:
- a plate-shaped body with a first side, through which the sliding element is intended to rest against a support surface on a first telescopic part of a telescopic device, and an opposite second side, which constitutes a sliding surface intended for sliding contact with a second telescopic part of the telescopic device; and
- at least one permanent magnet which is fixed to the plate-shaped body, wherein the permanent magnet is configured to be magnetically attracted to the first telescopic part in order to keep the sliding element attached to the first telescopic part.

By having one or more permanent magnets fixed to the sliding element, it will be possible to mount the sliding element to a telescopic part in a reliable manner without the use of any additional fastening members in the form of screws, pins or plugs. Hereby, the mounting of the sliding element to a telescopic part, and a later removal of the sliding element from the telescopic part, may be carried out in a rapid and simple manner.

Further advantages as well as advantageous features of the sliding element according to the present invention will appear from the description following below and the dependent claims.

The invention also relates to a telescopic device having the features defined in claim 6. This telescopic device, which particularly is a telescopic crane boom or a telescopic support leg, comprises at least two mutually displaceable telescopic parts and a sliding element according to the invention mounted to one of these telescopic parts.

### BRIEF DESCRIPTION OF THE DRAWINGS

With reference to the appended drawings, a specific description of embodiments of the invention cited as examples follows below. In the drawings:
- Fig 1: is a perspective view from below of a sliding element according to a first embodiment of the present invention,
- Fig 2: is a perspective view from above of the sliding of Fig 1,
- Fig 3: is a frontal view of the sliding element of Figs 1 and 2,
- Fig 4: is a longitudinal section through a sliding element of the type illustrated in Figs 1-3 arranged between two telescopic parts,
- Fig 5: is a perspective view of an end section of a telescopic crane boom part provided with a sliding element of the type illustrated in Figs 1-3,
- Fig 6: is a perspective view of the telescopic crane boom part of Fig 5, shown without sliding element,
- Fig 7: is a lateral view of a telescopic crane boom provided with sliding elements according to the present invention,
- Fig 8: is a perspective view from below of a sliding element according to a second embodiment of the invention,
- Fig 9: is a perspective view from above of the sliding element of Fig 8,
- Fig 10: is a longitudinal section through a sliding element of the type illustrated in Figs 8 and 9 arranged between two telescopic parts,
- Fig 11: is a perspective view of a part of a telescopic crane boom part provided with a sliding element of the type illustrated in Figs 8 and 9,
- Fig 12: is a perspective view from below of a sliding element according to a third embodiment of the invention, and
- Fig 13: is a longitudinal section through a sliding element of the type illustrated in Fig 12 arranged between two telescopic parts.

### DETAILED DESCRIPTION OF EMBODIMENTS OF THE INVENTION

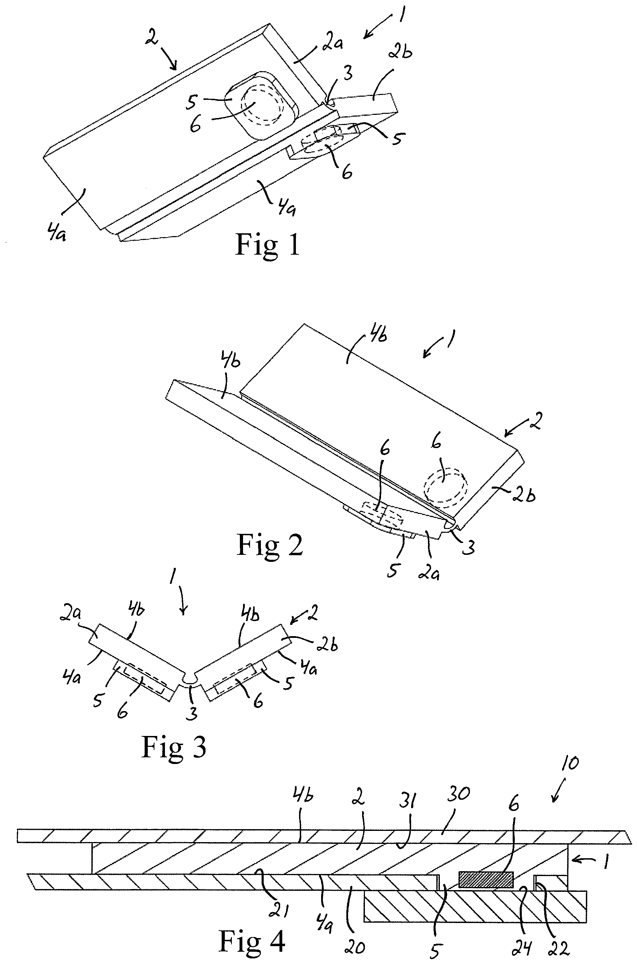

A sliding element 1, 1', 1" according to three different embodiments of the present invention is illustrated in Figs 1-3, 8-9 and 12. The sliding element 1, 1' ,1" is intended to be arranged between two mutually displaceable telescopic parts 20, 30 of a telescopic device 10 and comprises a plate-shaped body 2, which is made of a material with low coefficient of friction, such as for instance a suitable plastic material. Suitable materials may for instance be Robalon-Z, POLYform (POM) or the similar. As an alternative, the plate-shaped body 2 could be made of a suitable metallic material, such as for instance brass, or a suitable ceramic material. The body 2 may be rectangular as seen in a planar view or have any other suitable shape as seen in a planar view, for instance circular or elliptical. In the embodiment illustrated in Figs 1-3, the plate-shaped body 2 is divided into two parts 2a, 2b which are articulately connected to each other via a longitudinal joint 3 provided between the two parts 2a, 2b.

The sliding element 1, 1', 1" is to be mounted to a first telescopic part 20. The plate-shaped body 2 of the sliding element 1, 1', 1" has a first side 4a, through which the sliding element is intended to rest against a support surface 21 (see Figs 4, 6, 10 and 13) on the first telescopic part 20, and an opposite second side 4b, which constitutes a sliding surface and through which the sliding element 1, 1', 1" is intended to be in sliding contact with a surface 31 (see Figs 4, 10 and 13) on a second telescopic part 30.

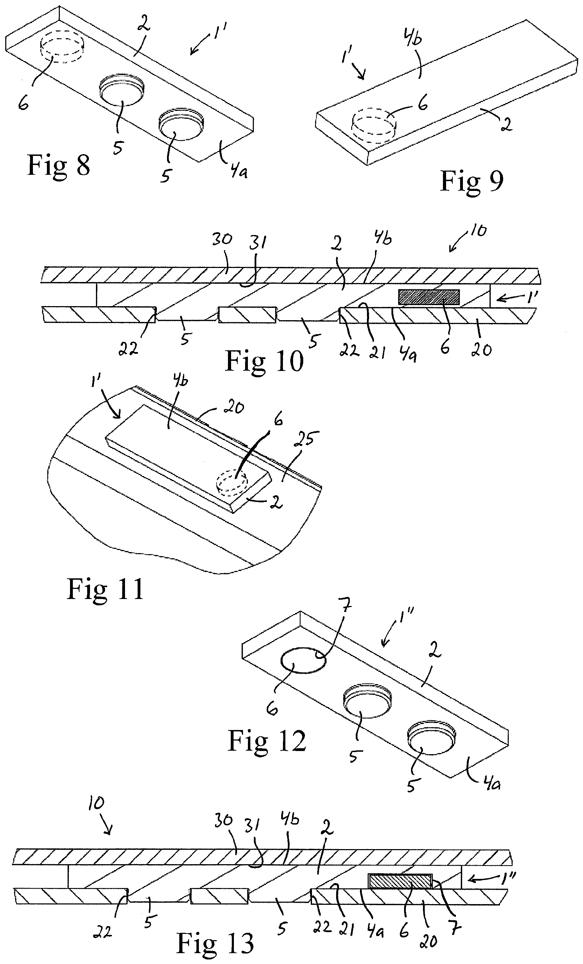

In the illustrated embodiments, projections 5 are arranged on the first side 4a of the plate-shaped body 2. Each projection 5 projects from the first side 4a of the body 2 and is designed for insertion into a corresponding recess 22 (see Figs 4, 6, 10 and 13) in the first telescopic part 20. Each such recess 22 is consequently designed to receive a projection 5 of a sliding element and it has a shape essentially corresponding to the shape of the associated projection 5 to thereby restrict the movability of the sliding element 1, 1', 1" longitudinally and laterally in relation to the first telescopic part 20 when the projection 5 is received in the recess 22. Consequently, the projections 5 act as stops lugs which contribute to keep the sliding element 1, 1' 1" correctly positioned on the first telescopic part 20. Each part 2a, 2b of the plate-shaped body 2 illustrated in Figs 1-3 is provided with one projection 5, and each one of the plate-shaped bodies 2 illustrated in Figs 8-13 is provided with two projections 5. However, the plate-shaped body 2 could as an alternative be provided with only one projection 5 or more than two projections. As a further alternative, the plate-shaped body 2 could be designed without any projection of the above-mentioned type if the first telescopic part is provided with slightly protruding stop members for restricting the movability of the sliding element longitudinally and laterally in relation to the first telescopic part or if the entire body 2 is seated in a shallow recess in the first telescopic part and thereby prevented from moving longitudinally and laterally in relation to the first telescopic part.

When the projections 5 are inserted into the associated recesses 22 in the first telescopic part 20, the plate-shaped body 2 rests with its first side 4a against the support surface 21 on the first telescopic part, as illustrated in Figs 4, 10 and 13.

The projections 5 and the associated recesses 22 may have a rectangular cross-sectional shape, as illustrated in Figs 1-6, a circular cross-sectional shape, as illustrated in Figs 8-13, or any other suitable shape. The projections 5 and the plate-shaped body 2 are suitably made in one piece, for instance by injection moulding.

The sliding element 1, 1', 1" comprises at least one permanent magnet 6 which is fixed to the plate-shaped body 2. The permanent magnet 6 is configured to be magnetically attracted to the first telescopic part 20 in order to keep the sliding element 1, 1', 1" attached to the first telescopic part. Each one of the plate-shaped bodies 2 illustrated in Figs 8-13 is provided with one permanent magnet 6 and the plate-shaped body 2 illustrated in Figs 1-3 is provided with two permanent magnets 6, one in each part 2a, 2b of the body 2. The plate-shaped body 2 could of course also be provided with more than two permanent magnets 6, if so desired.

The permanent magnet 6 may be embedded in the plate-shaped body 2, for instance in a projection 5 on the first side of the body 2, as illustrated in Figs 1-4, or in another part of the body 2, as illustrated in Figs 8-10. The embedded permanent magnets 6 are illustrated with broken lines in Figs 1-3, 5, 8 and 9. As an alternative, the permanent magnet 6 may be mounted in a recess 7 in the plate-shaped body 2, as illustrated in Figs 12 and 13. In the latter case, the permanent magnet 6 may be fastened in the recess 7 by gluing, by riveting, by means of one or more screws or in any other suitable manner.

The permanent magnet 6 is with advantage a neodymium magnet.

When the sliding element 1, 1', 1" has been properly mounted to a first telescopic part 20, the second side 4b of the body 2 is intended to be in sliding contact with a surface 31 of a second telescopic part 30 so as to thereby form a sliding surface between this second telescopic part 30 and the first telescopic part 20, as illustrated in Figs 4, 10 and 13. The two telescopic parts 20, 30 are arranged to be displaceable in relation to each other in a plane extending in parallel with the second side 4b of the body 2 and they may be arranged to rest against each other via the sliding element 1, 1', 1".

The telescopic device 10 according to the present invention may for instance have the form of a telescopic crane boom or a telescopic support leg, in which case the sliding element 1, 1', 1" is arranged between two telescopic crane boom parts or between two telescopic support leg parts.

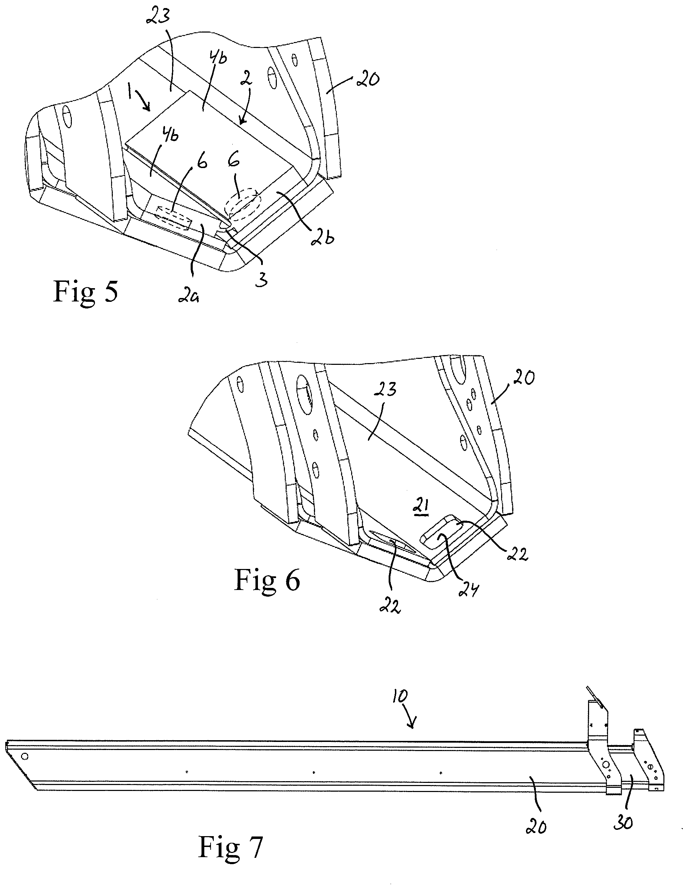

Fig 5 shows a sliding element 1 of the type illustrated in Figs 1-3 mounted to an end of a first telescopic part 20 of a telescopic device 10 in the form of a crane boom of the type illustrated in Fig 7. The sliding element 1 is attached to an inner wall 23 of the first telescopic part 20 and this first telescopic part is intended to be in sliding contact with a second telescopic part 30 of the telescopic device 10 via the sliding element. When a permanent magnet 6 is arranged in a projection 5 on the first side 4a of the plate-shaped body 2, the permanent magnet 6 is magnetically attracted to a surface 24 of steel or other magnetically attractable material provided at the bottom of the associated recess 22 in the first telescopic part 20. The magnetic attraction between the permanent magnets 6 and the surface 24 at the bottom of the recesses 22 keeps the sliding element 1 adhered to the first telescopic part 20.

Fig 11 shows a sliding element 1' of the type illustrated in Figs 8 and 9 mounted to a first telescopic part 20 of a telescopic device. The sliding element 1' is attached to an outer wall 25 of the first telescopic part 20 and this first telescopic part is intended to be in sliding contact with a second telescopic part of the telescopic device via the sliding element. The outer wall 25 is of steel or other magnetically attractable material. The magnetic attraction between the permanent magnet 6 and the outer wall 25 keeps the sliding element 1' adhered to the first telescopic part 20.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A sliding element intended to be mounted to a first telescopic part (20) of a telescopic device, the sliding element (1, 1', 1") comprising a plate-shaped body (2) with a first side (4a), through which the sliding element (1, 1', 1") is intended to rest against a support surface (21) on the first telescopic part (20), and an opposite second side (4b), which constitutes a sliding surface intended for sliding contact with a second telescopic part (30) of the telescopic device, **characterized in that** the sliding element (1, 1', 1") comprises at least one permanent magnet (6) which is fixed to the plate-shaped body (2), wherein the permanent magnet (6) is configured to be magnetically attracted to the first telescopic part (20) in order to keep the sliding element (1, 1', 1") attached to the first telescopic part.

2. A sliding element according to claim 1, **characterized in that** at least one projection (5) is provided on the first side (4a) of the plate-shaped body (2), wherein this projection (5) is configured for insertion into a corresponding recess (22) in the first telescopic part (20) in order to restrict the movability of the plate-shaped body (2) longitudinally and laterally in relation to the first telescopic part (20).

3. A sliding element according to claim 2, **characterized in that** said permanent magnet (6) is arranged in said projection (5).

4. A sliding element according to any of claims 1-3, **characterized in that** said permanent magnet (6) is embedded in the plate-shaped body (2).

5. A sliding element according to any of claims 1-3, **characterized in that** said permanent magnet (6) is mounted in a recess (7) in the plate-shaped body (2), preferably by gluing, by riveting or by means of one or more screws.

6. A telescopic device comprising:
- at least a first telescopic part (20) and a second telescopic part (30) which are telescopically connected to each other so as to allow a sliding movement between them; and
- at least one sliding element (1, 1', 1") which is mounted to the first telescopic part (20), the sliding element (1, 1', 1") comprising a plate-shaped body (2) with a first side (4a), through which the sliding element (1, 1', 1") is intended to rest against a support surface (21) on the first telescopic part (20), and an opposite second side (4b), which constitutes a sliding surface intended for sliding contact with the second telescopic part (30),
**characterized in that** the sliding element (1, 1', 1") comprises at least one permanent magnet (6) which is fixed to the plate-shaped body (2), wherein the permanent magnet (6) is configured to be magnetically attracted to the first telescopic part (20) in order to keep the sliding element (1, 1', 1") attached to the first telescopic part.

7. A telescopic device according to claim 6, **characterized in that** at least one projection (5) is provided on the first side (4a) of the plate-shaped body (2), wherein this projection (5) is configured for insertion into a corresponding recess (22) in the first telescopic part (20) in order to restrict the movability of the plate-shaped body (2) longitudinally and laterally in relation to the first telescopic part (20).

8. A telescopic device according to claim 7, **characterized in that** said permanent magnet (6) is arranged in said projection (5).

9. A telescopic device according to any of claims 6-8, **characterized in that** said permanent magnet (6) is embedded in the plate-shaped body (2).

10. A telescopic device according to any of claims 6-8, **characterized in that** said permanent magnet (6) is mounted in a recess (7) in the plate-shaped body, preferably by gluing or by means of one or more screws.

11. A telescopic device according to any of claims 6-10, **characterized in that** the telescopic device (10) is a telescopic crane boom.

12. A telescopic device according to any of claims 6-10, **characterized in that** the telescopic device (10) is a telescopic support leg.

## Patentansprüche

1. Gleitelement, das zur Montage an einem ersten Teleskopteil (20) einer Teleskopvorrichtung bestimmt ist, wobei das Gleitelement (1, 1', 1") einen plattenförmigen Körper (2) mit einer ersten Seite (4a), durch die das Gleitelement (1, 1', 1") an einer Trägerfläche (21) an dem ersten Teleskopteil (20) anliegen kann, und einer gegenüberliegenden zweiten Seite (4b) umfasst, die eine Gleitfläche bildet, die zum Gleitkontakt mit einem zweiten Teleskopteil (30) der Teleskopvorrichtung bestimmt ist, **dadurch gekennzeichnet, dass** das Gleitelement (1, 1', 1") zumindest einen Permanentmagneten (6) umfasst, der an dem plattenförmigen Körper (2) befestigt ist, wobei der Permanentmagnet (6) zur magnetischen Anziehung an dem ersten Teleskopteil (20) konfiguriert ist, um das Gleitelement (1, 1', 1") an dem ersten Teleskopteil befestigt zu halten.

2. Gleitelement nach Anspruch 1, **dadurch gekennzeichnet, dass** zumindest ein Vorsprung (5) an der ersten Seite (4a) des plattenförmigen Körpers (2) vorgesehen ist, wobei dieser Vorsprung (5) zum Einsetzen in eine entsprechende Ausnehmung (22) in dem ersten Teleskopteil (20) konfiguriert ist, um die Bewegbarkeit des plattenförmigen Körpers (2) längs und seitlich in Bezug auf das erste Teleskopteil (20) zu beschränken.

3. Gleitelement nach Anspruch 2, **dadurch gekennzeichnet, dass** der Permanentmagnet (6) in dem Vorsprung (5) angeordnet ist.

4. Gleitelement nach einem der Ansprüche 1 bis 3, **dadurch gekennzeichnet, dass** der Permanentmagnet (6) in dem plattenförmigen Körper (2) eingebettet ist.

5. Gleitelement nach einem der Ansprüche 1 - 3, **dadurch gekennzeichnet, dass** der Permanentmagnet (6) in einer Ausnehmung (7) in dem plattenförmigen Körper (2) bevorzugt durch Kleben, durch Nieten oder mittels einer oder mehrerer Schrauben befestigt ist.

6. Teleskopvorrichtung, umfassend:
- zumindest ein erstes Teleskopteil (20) und ein zweites Teleskopteil (30), die teleskopisch miteinander verbunden sind, um so eine Gleitbewegung zwischen diesen zu ermöglichen; und
- zumindest ein Gleitelement (1, 1', 1"), das an dem ersten Teleskopteil (20) montiert ist, wobei das Gleitelement (1, 1', 1") einen plattenförmigen Körper (2) mit einer ersten Seite (4a), durch die das Gleitelement (1, 1', 1") an einer Trägerfläche (21) an dem ersten Teleskopteil (20) anliegen kann, und einer gegenüberliegenden Seite (4b) umfasst, die eine Gleitfläche bildet, die zum Gleitkontakt mit dem zweiten Teleskopteil (30) bestimmt ist,
**dadurch gekennzeichnet, dass** das Gleitelement (1, 1', 1") zumindest einen Permanentmagneten (6) umfasst, der an dem plattenförmigen Körper (2) befestigt ist, wobei der Permanentmagnet (6) zur magnetischen Anziehung an dem ersten Teleskopteil (20) konfiguriert ist, um das Gleitelement (1, 1', 1") an dem ersten Teleskopteil befestigt zu halten.

7. Teleskopvorrichtung nach Anspruch 6, **dadurch gekennzeichnet, dass** zumindest ein Vorsprung (5) an der ersten Seite (4a) des plattenförmigen Körpers (2) vorgesehen ist, wobei dieser Vorsprung (5) zum Einsetzen in eine entsprechende Ausnehmung (22) in dem ersten Teleskopteil (20) konfiguriert ist, um die Bewegbarkeit des plattenförmigen Körpers (2) längs und seitlich in Bezug auf das erste Teleskopteil (20) zu beschränken.

8. Teleskopvorrichtung nach Anspruch 7, **dadurch gekennzeichnet, dass** der Permanentmagnet (6) in dem Vorsprung (5) angeordnet ist.

9. Teleskopvorrichtung nach einem der Ansprüche 6 - 8, **dadurch gekennzeichnet, dass** der Permanentmagnet (6) in dem plattenförmigen Körper (2) eingebettet ist.

10. Teleskopvorrichtung nach einem der Ansprüche 6 - 8, **dadurch gekennzeichnet, dass** der Permanentmagnet (6) in einer Ausnehmung (7) in dem plattenförmigen Körper bevorzugt durch Kleben oder mittels einer oder mehrerer Schrauben montiert ist.

11. Teleskopvorrichtung nach einem der Ansprüche 6 - 10, **dadurch gekennzeichnet, dass** die Teleskopvorrichtung (10) ein teleskopischer Kranausleger ist.

12. Teleskopvorrichtung nach einem der Ansprüche 6 - 10, **dadurch gekennzeichnet, dass** die Teleskopvorrichtung (10) ein teleskopisches Stützbein ist.

## Revendications

1. Elément coulissant destiné à être monté sur une première partie télescopique (20) d'un dispositif télescopique, l'élément coulissant (1, 1', 1") comprenant un corps en forme de plaque (2) avec un premier côté (4a), par lequel l'élément coulissant (1, 1', 1") est destiné à reposer contre une surface de support (21) sur la première partie télescopique (20), et un deuxième côté opposé (4b), qui constitue une surface coulissante destinée à un contact coulissant avec une deuxième partie télescopique (30) du dispositif télescopique, **caractérisé en ce que** l'élément coulissant (1, 1', 1") comprend au moins un aimant permanent (6) qui est fixé sur le corps en forme de plaque (2), dans lequel l'aimant permanent (6) est configuré pour être attiré magnétiquement par la première partie télescopique (20) afin de maintenir l'élément coulissant (1, 1', 1") attaché à la première partie télescopique.

2. Elément coulissant selon la revendication 1, **caractérisé en ce qu'**au moins une saillie (5) est prévue sur le premier côté (4a) du corps en forme de plaque (2), dans lequel cette saillie (5) est configurée pour être insérée dans un évidement correspondant (22) dans la première partie télescopique (20) afin de restreindre la mobilité du corps en forme de plaque (2) longitudinalement et latéralement par rapport à la première partie télescopique (20).

3. Elément coulissant selon la revendication 2, **caractérisé en ce que** ledit aimant permanent (6) est agencé dans ladite saillie (5).

4. Elément coulissant selon l'une quelconque des revendications 1 à 3, **caractérisé en ce que** ledit aimant permanent (6) est encastré dans ledit corps en forme de plaque (2).

5. Elément coulissant selon l'une quelconque des revendications 1 à 3, **caractérisé en ce que** ledit aimant permanent (6) est monté dans un évidement (7) dans le corps en forme de plaque (2), de préférence par collage, par rivetage ou au moyen d'une ou plusieurs vis.

6. Dispositif télescopique comprenant :
- au moins une première partie télescopique (20) et une deuxième partie télescopique (30) qui sont raccordées, de manière télescopique, l'une à l'autre afin de permettre un mouvement coulissant entre elles ; et
- au moins un élément coulissant (1, 1', 1") qui est monté sur la première partie télescopique (20), l'élément coulissant (1, 1', 1") comprenant un corps en forme de plaque (2) avec un premier côté (4a), par lequel l'élément coulissant (1, 1', 1") est destiné à reposer contre une surface de support (21) sur la première partie télescopique (20), et un deuxième côté opposé (4b), qui constitue une surface coulissante destinée à un contact coulissant avec la deuxième partie télescopique (30),
**caractérisé en ce que** l'élément coulissant (1, 1', 1") comprend au moins un aimant permanent (6) qui est fixé sur le corps en forme de plaque (2), dans lequel l'aimant permanent (6) est configuré pour être attiré magnétiquement par la première partie télescopique (20) afin de maintenir l'élément coulissant (1, 1', 1") attaché à la première partie télescopique.

7. Dispositif télescopique selon la revendication 6, **caractérisé en ce qu'**au moins une saillie (5) est prévue sur le premier côté (4a) du corps en forme de plaque (2), dans lequel cette saillie (5) est configurée pour être insérée dans un évidement correspondant (22) dans la première partie télescopique (20) afin de restreindre la mobilité du corps en forme de plaque (2) longitudinalement et latéralement par rapport à la première partie télescopique (20).

8. Dispositif télescopique selon la revendication 7, **caractérisé en ce que** ledit aimant permanent (6) est agencé dans ladite saillie (5).

9. Dispositif télescopique selon l'une quelconque des revendications 6 à 8, **caractérisé en ce que** ledit aimant permanent (6) est encastré dans ledit corps en forme de plaque (2).

10. Dispositif télescopique selon l'une quelconque des revendications 6 à 8, **caractérisé en ce que** ledit aimant permanent (6) est monté dans un évidement (7) dans le corps en forme de plaque, de préférence par collage, ou au moyen d'une ou plusieurs vis.

11. Dispositif télescopique selon l'une quelconque des revendications 6 à 10, **caractérisé en ce que** le dispositif télescopique (10) est une flèche de grue télescopique.

12. Dispositif télescopique selon l'une quelconque des revendications 6 à 10, **caractérisé en ce que** le dispositif télescopique (10) est un pied de support télescopique.
